# EUROPEAN PATENT SPECIFICATION

(11) **EP 2 210 962 B1**
(45) Date of publication and mention of the grant of the patent: **09.01.2013**
(21) Application number: 09460009.5
(22) Date of filing: 16.02.2009
(51) Int. Cl.: C22B 1/242, C22B 1/244, C22B 1/245, C22B 1/248, C22B 7/02, C22B 1/24

(54) **Method of manufacture of self-reducing briquets from rolling scale**
Verfahren zur Herstellung von selbstreduzierenden Briketts aus Walzzündern
Procédé de fabrication de briquettes autoréductibles à partir de battitures de laminage

(30) Priority: 09.12.2008 PL 38674708
(43) Date of publication of application: 28.07.2010
(73) Proprietor: Pras-Zlom Spolka z o.o., 08-110 Siedlce (PL)
(72) Inventor: Mazur, Wieslaw, 08-11-Siedlce (PL); Madej, Wladyslaw, 30-666 Krakow (PL)

(56) References cited:
- WO-A1-2008/146734
- DE-A1- 2 605 215
- GB-A- 2 075 909
- US-A- 3 807 986
- US-A- 4 917 723
- DATABASE WPI Week 198229 Thomson Scientific, London, GB; AN 1982-60996E XP002576734 & SU 852 952 A1 (FERROUS METALLURGY INST) 7 August 1981 (1981-08-07)

## Description

The object of the invention is a method of manufacture of self-reducing briquettes from the rolling scale without binding agent and binding material and without use of hot-briquetting like the sintering processes.

The briquettes manufactured according to the invention are destined for use in ferrous metallurgy, in particular for steel heat in the arc furnaces and for cast of pig iron in the shaft furnaces as a source of iron and/or as a reducing additive.

### State of the art

Rolling scale is produced in big quantities during the steel rolling process and it is a waste product. Usually, rolling scale produced in the rolling process is partially utilised in the ironworks, where the blast-furnace process is applied. In this case rolling scale is added in several percent amounts to agglomerated ingredients of a charge. The charge itself is a mixture of grained ores, additives, iron-bearing materials utilised in the blast-furnace, steelmaking and rolling processes, such as dust and slime obtained in purification of the blast-furnace gases, rolling scale, foundry scale, etc., with the quick coke added. The quick coke combustion results in heating of the components to the temperatures of 1280-1480 °C, high enough for sintering of small particles into porous material, called a sinter. During the sintering process the dust and gases are emitted in high quantities polluting the natural environment.

Various methods of utilisation of rolling scale in manufacture of briquettes are known. In applied briquetting methods binding agents and binding materials are added (cement, molasses, water-glass and other materials) to assure required resistance of briquettes. The binders added to the substrate, particularly the cement binders and calcium silicates, form binding coatings on fine-grained components, and they also present their isolating features resulting in slowing-down the chemical reactions needed in metallurgical processes. In this case the binders are also a ballast, because melting of the cement ceramics requires supply of surplus energy for melting, and melted binding materials form a slag which is a waste that increases production costs and burdens the environment. Augmentation of the amount of slag contributes to accelerated wear of the furnace lining. In turn organic binders, like e.g. waste oil used for hot-briquetting or paper pulp in cold briquetting, in higher temperatures are a source of big quantities of hydrocarbon pollutants emitted to the atmosphere.

Patent document US3807986 discloses cold-pressed briquettes which are made from 80-92% of metallic iron in the form of steel scrap (turnings, borings, chips, etc.), balance of iron oxide (i.e. 8-20% mill scale), and 0,3-0,55% of carbon. Other ingredients of the briquetted mixture are impurities like sulphur, silica, and copper. The effective density of formulated briquette is reported to be 5,5 g/cm³. These briquettes are characterised in high content of metallic iron and relatively low content of scale. Mill scale and carbon, according to this document, are necessary mainly for steel refining and triggering vigorous boiling of melted metal, to shield the furnace refractories from damage caused by radiation from the electric arcs and thus reduce fettling time. Proposed method of briquetting does not answer the need to recycle big quantities of rolling scale.

In a document SU852952 a content of 4-7% of carbon in hot-pressed briquettes is reported. The process of briquetting is based on carbonisation of flame coal, the content of which is 35-40% initially. The method demands much energy and it turns to be remarkably burdensome to the environment.

Even higher values of carbon in briquettes are known from DE2605215 (4-15% of carbon in form of coke or coal dust) and GB2075909 (10-40% of caking and softening hard coal). According to the former document the briquettes are cold-pressed, but the method requires addition of fibrous binder like paper pulp, textile waste or peat, and additional binders and fillers in form of pulverized minerals, e.g. cement, limestone and/or fluorspar. The dust of coke or coal may also be added. In this document the metal-bearing components are metallic wastes like borings or turnings, but no content of mill scale in the briquettes is disclosed. Neither in the latter document, GB2075909, the content of scale or generally metallic oxides is disclosed. According to this document, the briquettes are hot-pressed, the components being pre-heated to the temperatures below the coal softening point but above the temperature of briquetting.

Patent document US 4917723 discloses generally, without any useful numerical data, the process of briquetting of steel works wastes: metallic scrap and mill scale. In particular no acceptable contents of scale and carbon are specified in this document.

### Inventive problem

The need to turn waste mill scale into useful raw material can be met by increasing the content of scale in the briquettes used as addition or full heat for iron furnaces. Due to crispy physical properties of scale the problem of providing the briquette with sufficient strength arises. The aim of the invention is to propose the method of agglomeration of rolling wastes in a fumeless briquetting technology, without use of binding agents and materials, or high temperature. The briquettes should be a raw material of full value in iron metallurgy and shall not excessively burden the environment.

### Description of the invention

The method of manufacture of self-reducing briquettes from rolling scale is **characterised in that** an agglomeration into the form of a briquette of a mixture composed from: rolling scale in amount of 10-50%, steel chips in amount of 45-89%, and carbon in amount of 1-5%, is executed under adequate pressure acting on the mixture placed in the die block until it is consolidated to the density of at least 5 g/cm³, without use of binding agent or binding material and without use of hot-briquetting like the sintering process. Preparation of the mixture comprises subsequent operations:
- breaking up of steel chips to granulation of 0-30 mm in the impact mills, fragmentizers or dynamic crushers which produce multiplanary deformed grains and pieces with irregular edges and walls, and of determined granulation,
- breaking up of rolling scale to granulation of 0-5 mm,
- breaking up of carbon in form of graphite or quick coke to granulation of 0-3 mm,
- drying both the steel chips and rolling scale to humidity below 1%.

Excessive water contained in the briquettes causes fuming of furnaces, therefore it shall be eliminated from the ingredients for environmental and technical reasons. The mixture components are dosed by weight in amounts: the rolling scale 10-50%, steel chips 45-89%, and carbon-bearing material 10% of the amount of the scale, i.e. 1-5%. The components are mixed and when the mixture structure is homogeneous, the mixture is cold-pressed in special briquetting machines. After thickening to the density of at least 5 g/cm³, the briquettes are characterised with resistance and repeatability of composition and shape appropriate for use in steel melting in the arc furnaces or in the blast furnace process.

Agglomeration into the form of briquettes is made by kneading in the steel chips with irregular edges of rolling scale and carbon in form of the quick coke and/or graphite. Because of its smearing properties the graphite is particularly advantageous and its use in production of briquettes is illustrated in the examples described hereinafter.

### Advantageous effects of the invention

The self-reducing briquettes containing high percentage of rolling scale and made according to the invention are characterised with high density and big bulk density; lack of binding agents and binding materials, and porosity facilitating reduction of iron oxides inside the briquettes, which in turn produce small quantities of slag in steelmaking and blast-furnace processes. The briquettes are mechanically resistant, sufficiently to create no problems in storage and transportation.

### Preferred embodiments

### Example nr 1

Rolling scale from the breakdown mill with humidity of 3% and steel chips with humidity of 2%, broken-up in the rotary impact crushers to granulation of 0-5 mm and 0-30 mm, respectively, are dried to humidity of 1% in heated blast centrifuges. The charge substrates treated this way are loaded to two separate containers, while third container is loaded with graphite milled to granulation of 0-3 mm. The containers are equipped with tensometric batching scales which dose the substrates in proportions: scale 30%, steel chips 67%, graphite 3%, directly on the belt conveyor. The latter transports the material to the drum mixer, where during several minutes the mixture is homogenised.

Mixed substrates are delivered by the belt conveyor to the dosing system of the hydraulic pressure press, where prepared mixture is cold pressed with pressure per unit area 230 MPa. Cylindrical briquettes are obtained with diameter of 175 mm and height 90 mm +/- 10 mm and density of about 5,2 g/cm³. The briquettes are subjected to destructive testing for compression and dropping, and in case of intended use for steel melting in the arc furnaces an easiness of electric arc ignition is investigated additionally.

The results of testing are discussed hereinafter:
1. Destroying force (or force crushing the briquette) applied axially to the cylinder (briquette) base equals to 26 kN, while the force applied radially to the cylinder (briquette) side wall equals to 18 kN.
2. Dynamic resistance (important for transporting and loading) - in drop test on hard foundation from the height up to 2 m the briquettes preserve their resistance.
3. Easiness of electric arc ignition - investigated with a 380V/250A rotary welding machine.

In production the briquettes are stored by 1 Mg on a pallet and stacked.

Conclusions: the briquettes manufactured according to the invention conform to the requirements for the load materials of this kind for the arc furnaces and blast furnace process, they also contribute to the gamut of methods of waste recovery in fumeless processing technology.

### Example nr 2

The load substrates for production of the briquettes and their treatment is the same as in the Example nr 1. The dosing system was set for the proportions as follows: rolling scale 10%, steel chips 89%, graphite 1%. The mixture was pressed with the unit pressure of 213 MPa in the same die block. Produced briquettes had following parameters: diameter 175 mm, height 90 mm +/- 10 mm, density about 5,5 g/cm³. They were subjected to testing as was described in the Example nr 1 with the results as follows, respectively: destroying forces 32 kN and 20 kN, resistance to drop from height up to 2,5 m, easiness of electric arc ignition.

Conclusions are the same as in the example nr 1.

### Example nr 3

The load substrates for production of the briquettes and their treatment is the same as in the Example nr 1. The dosing system was set for the proportions as follows: rolling scale 50%, steel chips 45%, graphite 5%. The mixture was pressed with the unit pressure of 263 MPa in the same die block. Produced briquettes had following parameters: diameter 175 mm, height 100 mm +/- 10 mm, density about 5,0 g/cm³. They were subjected to testing as was described in the Example nr 1 with the results as follows, respectively: destroying forces 22 kN and 12 kN, resistance to drop from height up to 1,5 m, easiness of electric arc ignition.

The conclusions are similar to those in the Examples nr 1 and 2. Analysis of the testing results shows that observed reduction of the briquettes density and of their resistance to compression and dropping is closely related to an increase of percent content of the rolling scale in briquetted mixture, in spite of significant increase of unit pressure exerted on formed briquette.

Optimum proportions of the mixture intended to cold briquetting have been selected as follows: rolling scale 30%, steel chips 67%, carbon 3%, with pressure per unit area 230 MPa.

## Claims

1. A method of manufacture of self-reducing briquettes from rolling scale **characterised in that** a mixture comprising 10-50% of pre-processed rolling scale, 45-89% of pre-processed steel chips, and 1-5% of pre-processed carbon is pressed to the density of at least 5 g/cm³, with use of pressures high enough to obtain said density, and where pressing said mixture into briquettes is executed in cold-briquetting process, with no binding agent, binding material nor sintering process used, and where during briquetting the mixture is subjected to kneading of pre-processed rolling scale and pre-processed carbon within void spaces formed between pre-processed steel chips of irregular edges and walls, and where the pre-processing comprises the stages of:
- breaking up of steel chips in impact mills, fragmentizers or dynamic crushers which produce multiplanary deformed grains and pieces with irregular edges and walls, and of determined granulation,
- breaking up of rolling scale,
- breaking up of carbon in form of graphite or quick coke,
- drying both the steel chips and rolling scale to humidity below 1%.

2. The method according to claim 1 **characterised in that** the granulation of steel chips is 0-30 mm, granulation of rolling scale is 0-5 mm, and granulation of carbon grains is 0-3 mm.

3. The method according to claim 1 or 2 **characterised in that** the briquettes are formulated from the mixture comprising 20-50% of scale, 45% or more of steel chips, and 1-5% of carbon.

4. The method according to claim 1 or 2 or 3 **characterised in that** the briquettes are formulated from the mixture comprising 30% of scale, 67% of steel chips, and 3% of carbon.

5. The method according to claim 4 **characterised in that** the pressure applied equals to 230 MPa.

6. The method according to any claim from 1 to 5 **characterised in that** the density of the briquette is 5-5,5 g/cm³.

7. A self-reducing briquette **characterised in that** it is manufactured from a mixture comprising 20-50% of pre-processed rolling scale, 45% or more of pre-processed steel chips, and 1-5% of pre-processed carbon, pressed to the density of at least 5 g/cm³, with use of pressures high enough to obtain said density, and where pressing said mixture into briquettes is executed in cold-briquetting process, with no binding agent, binding material nor sintering process used, and where during briquetting the mixture is subjected to kneading of pre-processed rolling scale and pre-processed carbon within the spaces formed between pre-processed steel chips of irregular edges and walls, and where the pre-processing comprises the stages of:
- breaking up of steel chips in impact mills, fragmentizers or dynamic crushers which produce multiplanary deformed grains and pieces with irregular edges and walls, and of determined granulation,
- breaking up of the rolling scale,
- breaking up of carbon in form of graphite or quick coke,
- drying both the steel chips and rolling scale to humidity below 1%.

8. The briquette according to claim 7 **characterised in that** the granulation of steel chips is 0-30 mm, granulation of rolling scale is 0-5 mm, and granulation of carbon grains is 0-3 mm.

9. The briquette according to claim 7 or 8 **characterised in that** it is manufactured from the mixture comprising 30-50% of scale, 45-69% of steel chips, and 1-5% of carbon.

10. The briquette according to claim 7 or 8 or 9 **characterised in that** it is manufactured from the mixture comprising 30% of scale, 67% of steel chips, and 3% of carbon.

11. The briquette according to claim 10 **characterised in that** it is manufactured with pressure applied equal to 230 MPa.

12. The briquette according to any claim from 7 to 11 **characterised in that** the density of the briquette is 5-5,5 g/cm³.

## Patentansprüche

1. Verfahren zur Herstellung von selbstreduzierenden Briketts aus Walzzunder, **dadurch gekennzeichnet, dass** die Mischung bestehend aus 10-50% grob vorbereitetem Walzzunder, 45-89% grob vorbereiteten Stahlspäne und 1-5% grob vorbereiteter Kohle ist zur Dichte von mindestens 5g/cm³ mit entsprechend hohen Drücken gepresst bis sie eine Dichte erreicht, bei der das Kaltpressen durchgeführt wird ohne Binder, Schlämmstoff und Sintern zu verwenden, wo während der Brikettierung die Mischung aus grob vorbereitetem Zunder und grob vorbereiteter Kohle dem Pressen in den Hohlräumen zwischen den grob vorbereiteten Stahlspänen mit unregelmäßigen Kanten und Wänden ausgesetzt wird, wo eine grob Verarbeitung in folgenden Etappen stattfindet:
- Stahlspänezerkleinerung in Mühlen oder dynamischen Brecher, die erlauben eine mehrflächige Verformung von Teilchen und Blöcke mit unregelmäßigen Kanten und Wänden, aber mit bestimmter Körnigkeit zu erreichen,
- Zerkleinerung des Walzzunders,
- Zerkleinerung von Kohle in Form von Graphit oder Kleinkoks,
- Trocknung von Stahlspänen und Walzzunder bis die Feuchtigkeit unter 1% erreicht wird.

2. Verfahren nach Anspruch 1, **dadurch gekennzeichnet, dass** Körnigkeit von Stahlspänen von 0-30 mm, Körnigkeit von Walzzunder 0-5 mm, und Körnigkeit von Kohleteilchen 0-3 mm beträgt.

3. Verfahren nach einem der Ansprüche 1 oder 2, **dadurch gekennzeichnet, dass** Briketts aus der Mischung bestehend aus 20-50% Zunder, 45% oder mehr Stahlspäne und 1-5% Kohle hergestellt sind.

4. Verfahren nach einem der Ansprüche 1 oder 2, oder 3, **dadurch gekennzeichnet, dass** Briketts aus der Mischung bestehend aus 30% Zunder, 67% Stahlspäne und 3% Kohle hergestellt sind.

5. Verfahren nach Anspruch 4, **dadurch gekennzeichnet, dass** verwendeter Druck 230 MPa beträgt.

6. Verfahren nach einem der vorhergehenden Ansprüche ab 1 bis 5, **dadurch gekennzeichnet, dass** Dichte des Briketts 5-5,5 g/cm³ beträgt.

7. Selbstreduzierendes Brikett **dadurch gekennzeichnet, dass** es aus Mischung bestehend aus 20-50% grob vorbereitetem Walzzunder, 45% oder mehr grob vorbereiteten Stahlspäne und 1-5% grob vorbereiteter Kohle hergestellt ist, es ist zur Dichte von mindestens 5g/cm³ mit entsprechend hohen Drücken gepresst, bis die Mischung eine Dichte erreicht, bei der das Kaltpressen durchgeführt wird ohne Binder, Schlämmstoff und Sintern zu verwenden, wo während der Brikettierung die Mischung aus grob vorbereitetem Zunder und grob vorbereiteter Kohle dem Pressen in den Hohlräumen zwischen den grob vorbereiteten Stahlspänen mit unregelmäßigen Kanten und Wänden ausgesetzt wird, wo eine grob Verarbeitung in folgenden Etappen stattfindet:
- Stahlspänezerkleinerung in Mühlen oder dynamischen Brecher, die erlauben eine mehrflächige Verformung von Teilchen und Blöcke mit unregelmäßigen Kanten und Wänden, aber mit bestimmter Körnigkeit zu erreichen,
- Zerkleinerung des Walzzunders,
- Zerkleinerung von Kohle in Form von Graphit oder Koks,
- Trocknung von Stahlspänen und Walzzunder bis die Feuchtigkeit unter 1% erreicht wird.

8. Brikett nach Anspruch 7, **dadurch gekennzeichnet, dass** Körnigkeit von Stahlspänen 0-30 mm, Walzzunder 0-5 mm, und Teilchen von Kohle 0-3 mm beträgt.

9. Brikett nach Anspruch 7 oder 8, **dadurch gekennzeichnet, dass** es aus Mischung bestehend aus 30-50% Zunder, 45-69% Stahlspäne und 1-5% Kohle hergestellt wird.

10. Brikett nach Anspruch 7 oder 8, oder 9, **dadurch gekennzeichnet, dass** es aus der Mischung bestehend aus 30% Zunder, 67% Stahlspäne und 3% Kohle hergestellt wird.

11. Brikett nach Anspruch 10, **dadurch gekennzeichnet, dass** verwendeter Druck bei seiner Herstellung 230 MPa beträgt.

12. Brikett nach einem der vorhergehenden Ansprüche von 7 bis 11, **dadurch gekennzeichnet, dass** die Dichte des Briketts 5-5,5 g/cm³ beträgt.

## Revendications

1. Procédé de fabrication des briquettes auto-réducteurs de scories de laminoir **caractérisé en ce qu'**un mélange comprenant 10-50% de scories de laminoir pré-traités, 45-89% de copeaux d'acier pré-traités, et 1-5% de carbone pré-traité est pressée à la densité d'au moins 5 g/cm³, avec utilisation des pressions suffisamment grands pour obtenir ladite densité, et où le pressage dudit mélange en briquettes est exécuté en processus de briquetage à froid, sans liant ou la matière agglomérant ni procédé de frittage utilisés, et où au cours de briquetage le mélange est soumis à malaxage de scories de laminoir pré-traités et de carbone pré-traité dans les espaces vides formés entre les copeaux d'acier pré-traités avec des bords et des parois irréguliers, et où le pré-traitement comprend les étapes consistant à:
- broyage de copeaux d'acier dans les usines d'impact, malaxers ou broyeurs dynamiques qui produisent des grains et pièces déformés avec nombreux surfaces et avec des bords et des parois irréguliers, et de la granulation déterminée,
- broyage de scories de laminoir,
- broyage de carbone sous forme de graphite ou de grésillon,
- séchage de copeaux d'acier et de scories de laminoir à l'humidité en dessous de 1%.

2. Procédé selon la revendication 1, **caractérisé en ce que** la granulation des copeaux d'acier est de 0-30 mm, la granulation des scories de laminoir est de 0-5 mm, et la granulation des grains de carbone est de 0-3 mm.

3. Procédé selon la revendication 1 ou 2, **caractérisé en ce que** les briquettes sont formulées du mélange comprenant 20-50% de scories de laminoir, 45% ou plus de copeaux d'acier, et 1-5% de carbone.

4. Procédé selon la revendication 1 ou 2 ou 3, **caractérisé en ce que** les briquettes sont formulées du mélange comprenant 30% de scories de laminoir, 67% de copeaux d'acier, et 3% de carbone.

5. Procédé selon la revendication 4, **caractérisé en ce que** la pression appliquée est égale à 230 MPa.

6. Procédé selon l'une quelconque des revendications 1 à 5, **caractérisé en ce que** la densité de la briquette est de 5-5.5 g/cm³.

7. Une briquette auto-réducteur, **caractérisé en ce qu'**elle est fabriquée du mélange comprenant 20-50% de scories de laminoir pré-traités, 45% ou plus de copeaux d'acier pré-traités, et 1-5% de carbone de pré-traité, pressé à la densité d'au moins 5 g/cm³, avec utilisation des pressions suffisamment élevées pour obtenir ladite densité, et où le pressage dudit mélange en briquettes est exécuté en processus de briquetage à froid, sans liant ou la matière agglomérant ni procédé de frittage utilisés, et où au cours de briquetage le mélange est soumis à malaxage de scories de laminoir pré-traités et de carbone pré-traité dans les espaces vides formés entre les copeaux d'acier pré-traités avec des bords et des parois irréguliers, et où le pré-traitement comprend les étapes consistant à:
- broyage de copeaux d'acier dans les usines d'impact, malaxers ou broyeurs dynamiques qui produisent des grains et pièces déformés avec nombreux surfaces et avec des bords et des parois irréguliers, et de la granulation déterminée,
- broyage de scories de laminoir,
- broyage de carbone sous forme de graphite ou de grésillon,
- séchage de copeaux d'acier et de scories de laminoir à l'humidité en dessous de 1%.

8. La briquette selon la revendication 7, **caractérisé en ce que** la granulation des copeaux d'acier est de 0-30 mm, la granulation des scories de laminoir est de 0-5 mm, et la granulation des grains de carbone est de 0-3 mm.

9. La briquette selon la revendication 7 ou 8, **caractérisé en ce qu'**elle est fabriquée du mélange comprenant 30-50% de scories de laminoir, 45-69% de copeaux d'acier, et 1-5% de carbone.

10. La briquette selon la revendication 7 ou 8 ou 9, **caractérisé en ce qu'**elle est fabriquée du mélange comprenant 30% de scories de laminoir, 67% de copeaux d'acier, et 3% de carbone.

11. La briquette selon la revendication 10, **caractérisé en ce qu'**elle est fabriquée avec la pression appliquée égale à 230 MPa.

12. La briquette selon quelconque des revendications 7 à 11, **caractérisé en ce que** la densité de la briquette est de 5-5.5 g/cm³.
